(19) Europäisches Patentamt / European Patent Office / Office européen des brevets

(11) **EP 4 318 935 A1**

(12) **EUROPEAN PATENT APPLICATION**
published in accordance with Art. 153(4) EPC

(43) Date of publication:
**07.02.2024 Bulletin 2024/06**

(21) Application number: **22871589.2**

(22) Date of filing: **26.07.2022**

(51) International Patent Classification (IPC):
**H02P 23/24** (2016.01)

(52) Cooperative Patent Classification (CPC):
**H02P 1/40; H02P 23/03; H02P 23/24; H02P 25/02;**
**Y02P 80/10**

(86) International application number:
**PCT/CN2022/107725**

(87) International publication number:
**WO 2023/045530 (30.03.2023 Gazette 2023/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **23.09.2021 CN 202111116074**

(71) Applicant: **Zhejiang Chint Electrics Co., Ltd.**
**Yueqing, Zhejiang 325603 (CN)**

(72) Inventor: **CHEN, Weimeng**
**Yueqing, Zhejiang 325603 (CN)**

(74) Representative: **Petraz, Gilberto Luigi et al**
**GLP S.r.l.**
**Viale Europa Unita, 171**
**33100 Udine (IT)**

(54) **SOFT STARTER CONTROL METHOD CAPABLE OF CONTROLLING LOW-SPEED FORWARD ROTATION AND LOW-SPEED BACKWARD ROTATION OF MOTOR**

(57) The present invention relates to the technical field of motor control, in particular to a control method for a soft starter for controlling low-speed forward rotation and low-speed reverse rotation of a motor. A forward rotation frequency division coefficient $K_F$ of the low-speed forward rotation of the motor and a reverse rotation frequency division coefficient $K_R$ of the low-speed reverse rotation of the motor are determined through an improved method; and then, by controlling a trigger time sequence of thyristors and a time point at which the trigger signal is inputted to the thyristor each time, a frequency and a phase sequence of a three-phase input current of the motor are reduced without changing an input phase sequence of a power grid, the grid frequency and a main circuit of a transmission motor soft starter. Therefore, the motor is controlled for low-speed forward rotation at a rotating speed of $V_F$ or low-speed reverse rotation at a rotating speed of $V_R$.

FIG. 1

**Description**

**TECHNICAL FIELD**

The present invention relates to the technical field of motor control, in particular to a control method for a soft starter for controlling low-speed forward rotation and low-speed reverse rotation of a motor.

**BACKGROUND ART**

When a three-phase asynchronous motor is started directly, a current usually reaches 5 to 8 times or even greater to produce a large impact current, causing great fluctuations on a power grid in the same system, and adversely affecting the entire transmission system and equipment. A soft starter is a novel motor control device which integrates motor soft start, soft stop, light-load energy saving and a variety of protection functions. With the soft starter, the above problems are solved, and a starting current can be set and limited.

In some application scenarios, it is necessary to control low-speed forward rotation or low-speed reverse rotation of a motor. For example, in the course of cleaning a water pump, it is necessary to control the low-speed forward rotation or low-speed reverse rotation of the water pump, but the existing soft starter does not have a control function for low-speed forward rotation and low-speed reverse rotation. It is known that a speed of the three-phase asynchronous motor is directly proportional to a speed of a three-phase synchronous rotating magnetic field inputted to the motor, while the speed of the three-phase synchronous rotating magnetic field inputted to the motor is only directly proportional to the frequency of a three-phase current inputted to the input motor. Therefore, under the condition that the frequency of a voltage inputted to the motor remains unchanged, the motor speed can be reduced by reducing the frequency of the three-phase current of the motor, and the direction of motor operation can be changed by changing a phase sequence of the three-phase current of the motor.

The existing motor soft starter has a group of anti-parallel thyristors connected in series between an input terminal and an output terminal of each phase, with a total of three phases. Since the switching-on and switching-off actions of the thyristors are based on the switching-on and switching-off actions of voltage zero crossing, the frequency of the three-phase current of the motor may only be one of integer parts of the grid frequency. Therefore, under the condition that the grid frequency remains unchanged, if the existing soft starter wants to achieve the low-speed operation of the controlled motor, the frequency of the three-phase current of the motor must be reduced, and thus is discrete. Under the condition that the phase sequence of the grid frequency remains unchanged, the existing soft starter must simultaneously change the phase sequence of the three-phase current inputted to the motor while achieving the low-speed forward or reverse rotation of the controlled motor. In addition, under the condition that the voltage inputted to the motor remains unchanged, the reduction of the frequency of the three-phase current of the motor easily leads to the magnetic flux saturation of the motor, so it is necessary to synchronously reduce the voltage inputted to the motor. Referring to a VVVF speed control scheme of an frequency inverter, an output voltage amplitude of the soft starter must also be reduced synchronously, so as to avoid the burnout of the controlled motor due to magnetic flux saturation.

Based on the above situations, there is an urgent need for a soft starter, which controls the low-speed forward rotation and low-speed reverse rotation of the motor and runs smoothly without changing the input phase sequence of the power grid, the grid frequency and a main circuit of the existing motor soft starter.

**SUMMARY OF THE INVENTION**

An object of the present invention is to overcome the shortcomings of the prior art, and to provide a control method for a soft starter for controlling low-speed forward rotation and low-speed reverse rotation of a motor, which achieves the control over the low-speed forward rotation and low-speed reverse rotation of the motor by the existing soft starter.

In order to achieve the above object, the technical scheme adopted in the present invention is as follows:

A control method for a soft starter for controlling low-speed forward rotation and low-speed reverse rotation of a motor, wherein a soft starter comprises three phases of anti-parallel thyristors, wherein the anti-parallel thyristor connected in series between an input terminal of a T phase of a power grid and an input terminal of a W phase of the motor has a signal terminal $V_{T+}$ and a signal terminal $V_{T-}$; the anti-parallel thyristor connected in series between an input terminal of an S phase of the power grid and an input terminal of a V phase of the motor has a signal terminal $V_{S+}$ and a signal terminal $V_{S-}$; and the anti-parallel thyristor connected in series between an input terminal of an R phase of the power grid and an input terminal of a U phase of the motor has a signal terminal $V_{R+}$ and a signal terminal $V_{R-}$;

a forward-rotation frequency division coefficient $K_F$ of the low-speed forward rotation of the motor satisfies the following formula:

$$K_F = (\tfrac{2}{3} \times \pi + n_0 \times \pi)/(\tfrac{2}{3} \times \pi) = 1 + n_0 \times \tfrac{3}{2};$$

a speed of the low-speed forward rotation of the motor is $V_F = N_e \times \dfrac{1}{K_F}$,

in which, $n_0$ is an integer, $K_F$ is a positive integer, and $N_e$ is a rated speed of the motor;
a reverse-rotation frequency division coefficient $K_R$ of the low-speed reverse rotation of the motor satisfies the following formula:

$$K_R = (\tfrac{2}{3} \times \pi + n_1 \times \pi)/(-\tfrac{2}{3} \times \pi) = -1 - n_1 \times \tfrac{3}{2};$$

a speed of the low-speed reverse rotation of the motor is $V_R = N_e \times \dfrac{1}{K_R}$,

in which, $n_1$ is an integer, and $K_R$ is a positive integer; and
a trigger time sequence of the thyristors and a time point at which a trigger signal is inputted to the thyristor each time are controlled to control the motor with the soft starter for low-speed forward rotation at a speed of $V_F$ or low-speed reverse rotation at a speed of $V_R$.

Further, the control method for the soft starter makes the input current of each phase of the motor conform to the following conditions:

(1) a fundamental wave of the input current of each phase of the motor is a sine wave;
(2) a fundamental wave period $T_{base}$ of the input current of each phase of the motor is obtained based on the forward-rotation frequency division coefficient $K_F$ or the reverse-rotation frequency division coefficient $K_R$, and the fundamental wave frequency $T_{base}$ of the input current of each phase of the motor is a power grid period $T_{pwr} \times (K_F$ or $K_R$); and
(3) every two of fundamental wave phases of the input currents in respective phases of the motor are differed by 1/3 fundamental wave period $T_{base}$.

Further, when the phase of the fundamental wave of the V-phase input current of the motor lags the phase of the fundamental wave of the U-phase input current by 1/3 fundamental wave period and the phase of the fundamental wave of the W-phase input current of the motor lags the phase of the fundamental period of the U-phase input current by 1/3 fundamental wave period, a phase sequence of the input currents of the respective phases of the motor is a forward phase sequence, and the motor rotates forward at a low speed; and
when the phase of the fundamental wave of the V-phase input current of the motor lags the phase of the fundamental wave of the U-phase input current by 2/3 fundamental wave period and the phase of the fundamental wave of the W-phase input current of the motor lags the phase of the fundamental wave of the U-phase input current by 1/3 fundamental wave period, the phase sequence of the input currents of the respective phases of the motor is a reverse phase sequence, and the motor rotates reversely at a low speed.
Further, trigger signals may only be sent to two thyristors of different phases at the same time, and the two trigger signals are a forward trigger signal and a reverse trigger signal respectively.
Further, an output torque of the motor is adjusted by controlling a trigger angle of the thyristor.
Further, in the case that the forward-rotation frequency division coefficient $K_F$=4, the trigger angles and trigger time sequence of the thyristors and a time point at which the trigger signal is inputted to the thyristor each time are controlled by the following steps:

the period of the power grid is $T_{pwr}$, and then a period of a fundamental wave of a three-phase input current of the motor under a divide-by-4 low-speed forward rotation state is $T1_{base} = 4 \times T_{pwr}$;
in step 4-1: a moment at which a falling edge signal of a R-phase voltage zero-crossing point of the power grid is detected is recorded as a time point $t_{4-1}$; then, the falling edge signal of the R-phase voltage zero-crossing point of the power grid is detected every other $T1_{base}$; a moment after a delay of $T_{pwr}/6$ from the time point $t_{4-1}$ is recorded as a time point $t_{4-2}$; trigger signals are sent to the input terminals $V_T$ and $V_{S+}$ at the time point of $t_{4-2}$, with a trigger width of 1.0-3.3ms;
in step 4-2: a moment after a delay of $T_{pwr}/6$ from the time point $t_{4-2}$ is recorded as a time point $t_{4-3}$; trigger signals are simultaneously sent to the input terminals $V_{R-}$ and $V_{S+}$ at the time point of $t_{4-3}$, with a trigger width of 1.0-3.3ms;
in step 4-3: a moment after a delay of $T_{pwr}/6$ from the time point $t_{4-3}$ is recorded as a time point $t_{4-4}$; trigger signals

are simultaneously sent to the input terminals $V_{R-}$ and $V_{T+}$ at the time point of $t_{4-4}$, with a trigger width of 1.0-3.3ms;

in step 4-4: a moment after a delay of $T_{pwr}$ from the time point $t_{4-4}$ is recorded as a time point $t_{4-5}$; trigger signals are simultaneously sent to the input terminals $V_{R-}$ and $V_{T+}$ at the time point of $t_{4-5}$, with a trigger width of 1.0-3.3ms;

in step 4-5: a moment after a delay of $T_{pwr}/6$ from the time point $t_{4-5}$ is recorded as a time point $t_{4-6}$; trigger signals are simultaneously sent to the input terminals $V_{S-}$ and $V_{T+}$ at the time point of $t_{4-6}$, with a trigger width of 1.0-3.3ms;

in step 4-6: a moment after a delay of $T_{pwr}/6$ from the time point $t_{4-6}$ is recorded as a time point $t_{4-7}$; trigger signals are simultaneously sent to the input terminals $V_{R+}$ and $V_{S-}$ at the time point of $t_{4-7}$, with a trigger width of 1.0-3.3ms;

in step 4-7: a moment after a delay of $T_{pwr}$ from the time point $t_{4-7}$ is recorded as a time point $t_{4-8}$; trigger signals are simultaneously sent to the input terminals $V_{R+}$ and $V_{S-}$ at the time point of $t_{4-8}$, with a trigger width of 1.0-3.3ms;

in step 4-8: a moment after a delay of $T_{pwr}/6$ from the time point $t_{4-8}$ is recorded as a time point $t_{4-9}$; trigger signals are simultaneously sent to the input terminals $V_{R+}$ and $V_{T-}$ at the time point of $t_{4-9}$, with a trigger width of 1.0-3.3ms;

in step 4-9: a moment after a delay of $T_{pwr}/6$ from the time point $t_{4-9}$ is recorded as a time point $t_{4-10}$; trigger signals are simultaneously sent to the input terminals $V_{T+}$ and $V_{S+}$ at the time point t40, with a trigger width of 1.0-3.3ms; and

step 4-10: a falling edge signal of a voltage zero-crossing point of the R phase is detected, and steps 4-1 to 4-9 are repeated until a shutdown command is received.

Further, in the case that the reverse-rotation frequency division coefficient $K_R$=5, the trigger angles and trigger time sequence of the thyristors and a time point at which the trigger signal is inputted to the thyristor each time are controlled by the following steps:

the period of the power grid is $T_{pwr}$, and then a period of a fundamental wave of a three-phase input current of the motor under a divide-by-5 low-speed reverse rotation state is $T2_{base} = 5 \times T_{pwr}$.

in step 5-1: a moment at which a falling edge signal of a R-phase voltage zero-crossing point of the power grid is detected is recorded as a time point $t_{5-1}$; then, the falling edge signal of the R-phase voltage zero-crossing point of the power grid is detected every other $T2_{base}$; a moment after a delay of $T_{pwr}/3$ from the time point $t_{5-1}$ is recorded as a time point $t_{5-2}$; trigger signals are simultaneously sent to the input terminals $V_{R-}$ and $V_{S+}$ at the time point of $t_{5-2}$, with a trigger width of 1.0-3.3ms;

in step 5-2: a moment after a delay of $T_{pwr}/6$ from the time point $t_{5-2}$ is recorded as a time point $t_{5-3}$; trigger signals are simultaneously sent to the input terminals $V_{R-}$ and $V_{T+}$ at the time point of $t_{5-3}$, with a trigger width of 1.0-3.3ms;

in step 5-3: a moment after a delay of $T_{pwr}2/3$ from the time point $t_{5-3}$ is recorded as a time point $t_{5-4}$; trigger signals are simultaneously sent to the input terminals $V_{S+}$ and $V_{T-}$ at the time point of $t_{5-4}$, with a trigger width of 1.0-3.3ms;

in step 5-4: a moment after a delay of $T_{pwr}/6$ from the time point $t_{5-4}$ is recorded as a time point $t_{5-5}$; trigger signals are simultaneously sent to the input terminals $V_{R-}$ and $V_{S+}$ at the time point of $t_{5-5}$, with a trigger width of 1.0-3.3ms;

in step 5-5: a moment after a delay of $T_{pwr}2/3$ from the time point $t_{5-5}$ is recorded as a time point $t_{5-6}$; trigger signals are simultaneously sent to the input terminals $V_{R+}$ and $V_{T-}$ at the time point of $t_{5-6}$, with a trigger width of 1.0-3.3ms;

in step 5-6: a moment after a delay of $T_{pwr}/6$ from the time point $t_{5-6}$ is recorded as a time point $t_{5-7}$; trigger signals are simultaneously sent to the input terminals $V_{S+}$ and $V_{T-}$ at the time point of $t_{5-7}$, with a trigger width of 1.0-3.3ms;

in step 5-7: a moment after a delay of $T_{pwr}2/3$ from the time point $t_{5-7}$ is recorded as a time point $t_{5-8}$; trigger signals are simultaneously sent to the input terminals $V_{S-}$ and $V_{R+}$ at the time point of $t_{5-8}$, with a trigger width of 1.0-3.3ms;

in step 5-8: a moment after a delay of $T_{pwr}/6$ from the time point $t_{5-8}$ is recorded as a time point $t_{5-9}$; trigger signals are simultaneously sent to the input terminals $V_{R+}$ and $V_{T-}$ at the time point of $t_{5-9}$, with a trigger width of 1.0-3.3ms;

in step 5-9: a moment after a delay of $T_{pwr}2/3$ from the time point $t_{5-9}$ is recorded as a time point $t_{5-10}$; trigger signals are simultaneously sent to the input terminals $V_{S-}$ and $V_{T+}$ at the time point of $t_{5-10}$, with a trigger width of 1.0-3.3ms;

in step 5-10: a moment after a delay of $T_{pwr}/6$ from the time point $t_{5-10}$ is recorded as a time point $t_{5-11}$; trigger signals are simultaneously sent to the input terminals $V_{S-}$ and $V_{R+}$ at the time point of $t_{5-11}$, with a trigger width of 1.0-3.3ms;

in step 5-11: a moment after a delay of $T_{pwr}2/3$ from the time point $t_{5-10}$ is recorded as a time point $t_{5-12}$; trigger signals are simultaneously sent to the input terminals $V_{R-}$ and $V_{T+}$ at the time point of $t_{5-12}$, with a trigger width of 1.0-3.3ms;

in step 5-12: a moment after a delay of $T_{pwr}/6$ from the time point $t_{5-11}$ is recorded as a time point $t_{5-13}$; trigger signals are simultaneously sent to the input terminals $V_{S-}$ and $V_{T+}$ at the time point of $t_{5-13}$, with a trigger width of 1.0-3.3ms; and

step 5-13: a falling edge signal of a voltage zero-crossing point of the R phase is detected, and steps 5-1 to 5-12 are repeated until a shutdown command is received.

Further, the output torque of the motor is increased or decreased by synchronously decreasing or increasing the trigger angle during the fundamental wave period of the three-phase input current of the motor.

Further, the trigger angle is reduced by $\delta$ degrees each time, $9 \le \delta \le 36$.

Further, the anti-parallel thyristor connected in series between the input terminal of the T phase of the power grid and the input terminal of the W phase of the motor comprises a T-phase positive thyristor SCR5 and a T-phase negative thyristor SCR6, the T-phase positive thyristor SCR5 has a signal terminal $V_{T+}$, and the T-phase negative thyristor SCR6 has a signal terminal $V_{T-}$; the anti-parallel thyristor connected in series between the input terminal of the S phase of the power grid and the input terminal of the V phase of the motor comprises an S-phase positive thyristor SCR3 and an S-phase negative thyristor SCR4, the S-phase positive thyristor SCR3 has a signal terminal $V_{S+}$, and the S-phase negative thyristor SCR4 has a signal terminal $V_{S-}$; and the anti-parallel thyristor connected in series between the input terminal of the R phase of the power grid and the input terminal of the U phase of the motor includes comprises an R-phase positive thyristor SCR1 and an R-phase negative thyristor SCR2, the R-phase positive thyristor SCR1 has a signal terminal $V_{R+}$, and the R-phase negative thyristor SCR2 has a signal terminal $V_{R-}$.

Further, the forward-rotation frequency division coefficient $K_F$ of the low-speed forward rotation of the motor is calculated as follows:

an angular velocity of rotation of a power frequency magnetic field is $\omega_1$, and an angular velocity of rotation of the magnetic field after forward frequency division is $\omega_{2F}$, and a relationship of $\omega_1$ and $\omega_{2F}$ conforms to the following equation:

$$\omega_1 = K_F \times \omega_{2F} \quad \text{Equation (1)}$$

in which, $K_F$ is a forward-rotation frequency division coefficient and is a positive integer;
the power grid is a three-phase equilibrium system, wherein a phase difference between every two phases is 120°, the A phase and the B phase are any two of R, S, T phases of the power grid, and when a phase angle of the A phase is 0°, a phase angle of the B phase conforms to the following equation:

$$\omega_1 \times t - (2/3)\pi = n_0\pi \quad \text{Equation (2)}$$

in which, n is an integer, and t is time;
the low-speed forward-rotation frequency division power grid system, that is, a three-phase power supply system that makes the soft starter rotate at a low speed inputted by the soft starter to the motor, is also a three-phase equilibrium system, wherein a phase difference between every two phases is 120°, an $A_F$ phase and a $B_F$ phase are any two of three phases (i.e., the $A_F$ phase and the $B_F$ phase are any two of U, V and W phases of input currents that make the motor rotate forward at a low speed) of the low-speed forward-rotation frequency division power grid system; and when a phase angle of the $A_F$ phase is 0°, a phase angle of the $B_F$ phase conforms to the following equation:

$$\omega_{2F} \times t - (2/3)\pi = 0 \quad \text{Equation (3)}$$

the following equation is obtained by transformation of Equation (3):

$$\omega_{2F} \times t = (2/3)\pi \quad \text{Equation (4)}$$

the following equation is obtained by substituting Equation (1) into Equation (2):

$$K_F \times \omega_{2F} \times t = (2/3)\pi + n_0\pi \quad \text{Equation (5)}$$

the following equation is obtained by substituting Equation (3) into Equation (5):

$$K_F = (\tfrac{2}{3} \times \pi + n_0 \times \pi)/(\tfrac{2}{3} \times \pi) = 1 + n_0 \times \tfrac{3}{2};$$

the reverse-rotation frequency division coefficient $K_R$ of the low-speed reverse rotation of the motor is calculated by the following method:

an angular velocity of rotation of a power frequency magnetic field is $\omega_1$, and an angular velocity of rotation of the magnetic field after reverse-rotation frequency division is $\omega_{2R}$, and a relationship of $\omega_1$ and $\omega_2$ conforms to

the following equation:

$$\omega_1 = K_R \times \omega_{2R} \qquad \text{Equation (6)}$$

in which, $K_R$ is a reverse-rotation frequency division coefficient and is a positive integer;
the power grid is a three-phase equilibrium system, wherein a phase difference between every two phases is 120°, the A phase and the B phase are any two of R, S, T phases of the power grid, and when a phase angle of the A phase is 0°, a phase angle of the B phase conforms to the following equation:

$$\omega_1 \times t - (2/3)\pi = n_1\pi \qquad \text{Equation (7)}$$

in which, n is an integer, and t is time;
the low-speed reverse-rotation frequency division power grid system, that is, a three-phase power supply system that makes the soft starter rotate at a low speed inputted by the soft starter to the motor, is also a three-phase equilibrium system, wherein a phase difference between every two phases is 120°, an $A_R$ phase and a $B_R$ phase are any two of three phases (i.e., the $A_R$ phase and the $B_R$ phase are any two of U, V and W phases of input currents that make the motor to rotate reversely at a low speed) of the low-speed reverse-rotation frequency division power grid system; and when a phase angle of the $A_R$ phase is 0°, a phase angle of the $B_R$ phase conforms to the following equation:

$$\omega_{2R} \times t + (2/3)\pi = 0 \qquad \text{Equation (8)}$$

the following equation is obtained by transformation of Equation (8):

$$\omega_{2R} \times t = -(2/3)\pi \qquad \text{Equation (9)}$$

the following equation is obtained by substituting Equation (6) into Equation (7):

$$K_R \times \omega_{2R} \times t = (2/3)\pi + n_1\pi \qquad \text{Equation (10)}$$

the following equation is obtained by substituting Equation (9) into Equation (10):

$$K_R = (\tfrac{2}{3} \times \pi + n_1 \times \pi)/(-\tfrac{2}{3} \times \pi) = -1 - n_1 \times \tfrac{3}{2}.$$

According to the control method for the soft starter for controlling low-speed forward rotation and low-speed reverse rotation of the motor, the forward rotation frequency division coefficient $K_F$ of the low-speed forward rotation of the motor and the reverse rotation frequency division coefficient $K_R$ of the low-speed reverse rotation of the motor are determined through an improved method without changing an input phase sequence of the power grid, a grid frequency and a main circuit of a transmission motor soft starter; and then, by controlling a trigger time sequence of the thyristors and a time point at which a trigger signal is inputted to the thyristor each time, a frequency and a phase sequence of the three-phase input current of the motor are reduced. Therefore, the motor is controlled for low-speed forward rotation at a rotating speed of $V_F$ or low-speed reverse rotation at a rotating speed of $V_R$.

**BRIEF DESCRIPTION OF THE DRAWINGS**

FIG. 1 is a schematic structural diagram of a circuit in a soft starter of the present invention;
FIG. 2 is a schematic waveform diagram of a fundamental wave of a three-phase input current of the motor during divide-by-4 low-speed forward rotation of the present invention; and
FIG. 3 is a schematic waveform diagram of a fundamental wave of a three-phase input current of the motor during divide-by-5 low-speed reverse rotation of the present invention.

**DETAILED DESCRIPTION OF THE PREFERRED EMBODIMENTS**

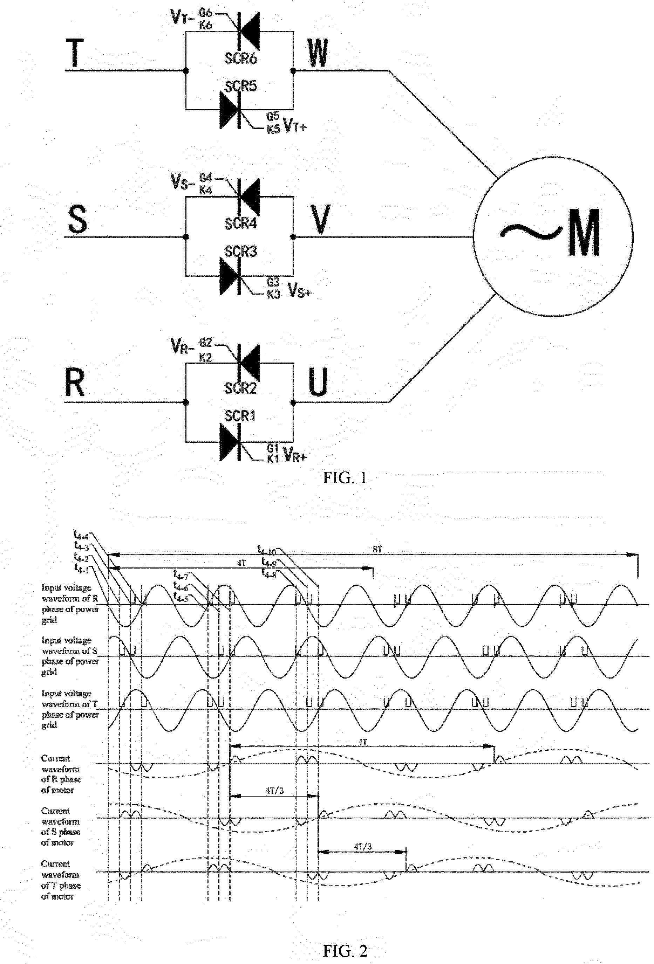

The specific implementation of a control method for a soft starter for controlling low-speed forward rotation and low-speed reverse rotation of a motor of the present invention will be further described below in conjunction with the embodiments given in FIGS. 1 to 3. The control method for the soft starter for controlling low-speed forward rotation and low-speed reverse rotation of the motor of the present invention is not limited to the description of the following embodiments.

As shown in FIG. 1, an embodiment of the soft starter of the present invention is shown.

The soft starter includes three phases of anti-parallel thyristors, wherein the anti-parallel thyristor connected in series between an input terminal of a T phase of a power grid and an input terminal of a W phase of the motor has a signal terminal $V_{T+}$ and a signal terminal $V_{T-}$; the anti-parallel thyristor connected in series between an input terminal of an S phase of the power grid and an input terminal of a V phase of the motor has a signal terminal $V_{S+}$ and a signal terminal $V_{S-}$; and the anti-parallel thyristor connected in series between an input terminal of an R phase of the power grid and an input terminal of a U phase of the motor has a signal terminal $V_{R+}$ and a signal terminal $V_{R-}$. Further, the anti-parallel thyristor connected in series between the input terminal of the T phase of the power grid and the input terminal of the W phase of the motor includes a T-phase positive thyristor SCR5 and a T-phase negative thyristor SCR6, the T-phase positive thyristor SCR5 has a signal terminal $V_{T+}$, and the T-phase negative thyristor SCR6 has a signal terminal $V_{T-}$; the anti-parallel thyristor connected in series between the input terminal of the S phase of the power grid and the input terminal of the V phase of the motor includes an S-phase positive thyristor SCR3 and an S-phase negative thyristor SCR4, the S-phase positive thyristor SCR3 has a signal terminal $V_{S+}$, and the S-phase negative thyristor SCR4 has a signal terminal $V_{S-}$; and the anti-parallel thyristor connected in series between the input terminal of the R phase of the power grid and the input terminal of the U phase of the motor includes an R-phase positive thyristor SCR1 and an R-phase negative thyristor SCR2, the R-phase positive thyristor SCR1 has a signal terminal $V_{R+}$, and the R-phase negative thyristor SCR2 has a signal terminal $V_{R-}$. Further, the signal terminal $V_{T+}$, the signal terminal $V_{T-}$, the signal terminal $V_{S+}$, the signal terminal $V_{S-}$, the signal terminal $V_{R+}$ and the signal terminal $V_{R-}$ are connected to G electrodes of the T-phase positive thyristor SCR5, the T-phase negative thyristor SCR6, the S-phase positive thyristor SCR3, the S-phase negative thyristor SCR4, the R-phase positive thyristor SCR1 and the R-phase negative thyristor SCR2, respectively.

The control method for the soft starter for controlling low-speed forward rotation and low-speed reverse rotation of the motor of the present invention is applied to the soft starter.

A forward-rotation frequency division coefficient $K_F$ of the low-speed forward rotation of the motor satisfies the following formula:

$$K_F = (\frac{2}{3} \times \pi + n_0 \times \pi)/(\frac{2}{3} \times \pi) = 1 + n_0 \times \frac{3}{2};$$

$$V_F = N_e \times \frac{1}{K_F},$$

a speed of the low-speed forward rotation of the motor is

in which, $n_0$ is an integer, $K_F$ is a positive integer, and $N_e$ is a rated speed of the motor;

a reverse-rotation frequency division coefficient $K_R$ of the low-speed reverse rotation of the motor satisfies the following formula:

$$K_R = (\frac{2}{3} \times \pi + n_1 \times \pi)/(-\frac{2}{3} \times \pi) = -1 - n_1 \times \frac{3}{2};$$

$$V_R = N_e \times \frac{1}{K_R},$$

a speed of the low-speed reverse rotation of the motor is

in which, $n_1$ is an integer, and $K_R$ is a positive integer; and

a trigger time sequence of the thyristors and a time point at which a trigger signal is inputted to the thyristor each time are controlled to control the motor through the soft starter for low-speed forward rotation at a speed of $V_F$ or low-speed reverse rotation at a speed of $V_R$.

Specifically, the forward-rotation frequency division coefficient $K_F$ may be 4, 7, 10, 13, 16, etc. Therefore, the speed of the low-speed forward rotation of the motor may be $\frac{1}{4} N_e$, $\frac{1}{7} N_e$, $\frac{1}{10} N_e$, $\frac{1}{13} N_e$, $\frac{1}{16} N_e$, etc. Specifically, the reverse-rotation frequency division coefficient $K_R$ may be 2, 5, 8, 11, 14, etc. Therefore, the speed of the low-speed reverse rotation of the motor may be $\frac{1}{2}N_e$, $\frac{1}{5}N_e$, $\frac{1}{8}N_e$, $\frac{1}{11}N_e$, $\frac{1}{14}N_e$, etc.

According to the control method for the soft starter for controlling low-speed forward rotation and low-speed reverse rotation of the motor, the forward rotation frequency division coefficient $K_F$ of the low-speed forward rotation of the motor and the reverse rotation frequency division coefficient $K_R$ of the low-speed reverse rotation of the motor are determined through an improved method without changing an input phase sequence of the power grid, a grid frequency and a main circuit of a transmission motor soft starter; and then, by controlling a trigger time sequence of the thyristors and a time point at which a trigger signal is inputted to the thyristor each time, a frequency and a phase sequence of the three-phase input current of the motor are reduced. Therefore, the motor is controlled for low-speed forward rotation at a rotating speed of $V_F$ or low-speed reverse rotation at a rotating speed of $V_R$.

A calculation process of the forward-rotation frequency division coefficient $K_F$ of the low-speed forward rotation of the motor is as follows:

an angular velocity of rotation of a power frequency magnetic field is $\omega_1$, and an angular velocity of rotation of the magnetic field after forward-rotation frequency division is $\omega_{2F}$, and a relationship of $\omega_1$ and $\omega_{2F}$ conforms to the following equation:

$$\omega_1 = K_F \times \omega_{2F} \qquad \text{Equation (1)}$$

in which, $K_F$ is a forward-rotation frequency division coefficient and is a positive integer;
the power grid is a three-phase equilibrium system, wherein a phase difference between every two phases is 120°, an A phase and a B phase are any two of R, S, T phases of the power grid, and when a phase angle of the A phase is 0°, a phase angle of the B phase conforms to the following equation:

$$\omega_1 \times t - (2/3)\pi = n_0\pi \qquad \text{Equation (2)}$$

in which, n is an integer, and t is time;
the low-speed forward-rotation frequency division power grid system, that is, a three-phase power supply system that makes the soft starter rotate forward at a low speed inputted by the soft starter to the motor, is also a three-phase equilibrium system, wherein a phase difference between every two phases is 120°, a $A_F$ phase and a $B_F$ phase are any two of three phases (i.e., the $A_F$ phase and the $B_F$ phase are any two of U, V and W phases of input currents that make the motor rotate forward at a low speed) of the low-speed forward-rotation frequency division power grid system; the $A_F$ phase and the $B_F$ phase correspond to the A phase and the B phase, respectively; a frequency of the three-phase power grid of the A phase and the B phase is $K_F$ times of a frequency of the three-phase power grid system of the $A_F$ phase and the $B_F$ phase; the $B_F$ phase lags the $A_F$ phase by $(2/3)\pi$; and when a phase angle of the $A_F$ phase is 0°, a phase angle of the $B_F$ phase conforms to the following equation:

$$\omega_{2F} \times t - (2/3)\pi = 0 \qquad \text{Equation (3);}$$

the following equation is obtained by transformation from Equation (3):

$$\omega_{2F} \times t = (2/3)\pi \qquad \text{Equation (4)}$$

the following equation is obtained by substituing Equation (1) into Equation (2):

$$K_F \times \omega_{2F} \times t = (2/3)\pi + n_0\pi \qquad \text{Equation (5)}$$

the following equation is obtained by substituing Equation (4) into Equation (5):

$$K_F = (\tfrac{2}{3} \times \pi + n_0 \times \pi)/(\tfrac{2}{3} \times \pi) = 1 + n_0 \times \tfrac{3}{2}.$$

In the case that $n_0$ is an integer, $K_F$ in which $K_F$ is a positive integer is selected as a forward-rotation frequency division coefficient.

A calculation process of the reverse-rotation frequency division coefficient $K_R$ of the low-speed reverse rotation of the motor is as follows:

an angular velocity of rotation of a power frequency magnetic field is $\omega_1$, and an angular velocity of rotation of the magnetic field after reverse-rotation frequency division is $\omega_{2R}$, and a relationship of $\omega_1$ and $\omega_2$ conforms to the following equation:

$$\omega_1 = K_R \times \omega_{2R} \qquad \text{Equation (6)}$$

in which, $K_R$ is a reverse-rotation frequency division coefficient and is a positive integer;
the power grid is a three-phase equilibrium system, wherein a phase difference between every two phases is 120°, the A phase and the B phase are any two of R, S, T phases of the power grid, and when a phase angle of the A phase is 0°, a phase angle of the B phase conforms to the following equation:

$$\omega_1 \times t - (2/3)\pi = n_1\pi \qquad \text{Equation (7)}$$

in which, n is an integer, and t is time;
the low-speed reverse-rotation frequency division power grid system, that is, a three-phase power supply system that makes the soft starter rotate reversely at a low speed inputted by the soft starter to the motor, is also a three-phase equilibrium system, wherein a phase difference between every two phases is 120°, a $A_R$ phase and a $B_R$ phase are any two of three phases (i.e., the $A_R$ phase and the $B_R$ phase are any two of U, V and W phases of input currents that make the motor rotate reversely at a low speed) of the low-speed reverse-rotation frequency division power grid system; the $A_R$ phase and the $B_R$ phase correspond to the A phase and the B phase, respectively; a frequency of the three-phase power grid of the A phase and the B phase is $K_R$ times of a frequency of the three-phase power grid system of the $A_R$ phase and the $B_R$ phase; the $B_R$ phase is $(2/3)\pi$ ahead of the $A_R$ phase; and when a phase angle of the $A_R$ phase is 0°, a phase angle of the $B_R$ phase conforms to the following equation:

$$\omega_{2R} \times t + (2/3)\pi = 0 \qquad \text{Equation (8)}$$

the following equation is obtained by transformation of Equation (8):

$$\omega_{2R} \times t = -(2/3)\pi \qquad \text{Equation (9)}$$

the following equation is obtained by substituting Equation (6) into Equation (7):

$$K_R \times \omega_{2R} \times t = (2/3)\pi + n_1\pi \qquad \text{Equation (10)}$$

the following equation is obtained by substituting Equation (9) into Equation (10): and

$$K_R = (\frac{2}{3} \times \pi + n_1 \times \pi)/(-\frac{2}{3} \times \pi) = -1 - n_1 \times \frac{3}{2}.$$

in the case that $n_1$ is an integer, $K_R$ in which $K_R$ is a positive integer is selected as a reverse-rotation frequency division coefficient.

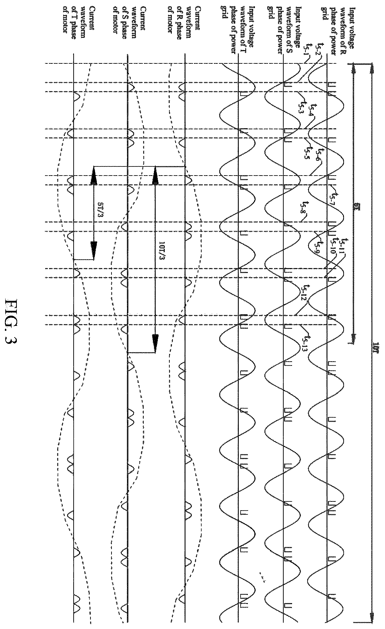

As shown in FIG. 2 and FIG. 3, the control method for the soft starter makes the input current of each phase of the motor conform to the following conditions.

(1) A fundamental wave of the input current of each phase of the motor is a sine wave. Therefore, the input current waveform of each phase of the motor is in three-phase symmetry, wherein every two phases are differed by 1/3 period, and meanwhile an effective value of the input current of each phase of the motor is also balanced.

(2) A fundamental wave period $T_{base}$ of the input current of each phase of the motor is obtained based on the forward-rotation frequency division coefficient $K_F$ or the reverse-rotation frequency division coefficient $K_R$, and a fundamental wave frequency of the input current of each phase of the motor = grid frequency $\times$ ( $\frac{1}{K_F}$ or $\frac{1}{K_R}$ ), that is, the fundamental wave period $T_{base}$ of the current = the grid period $T_{pwr}$ * ($K_F$ or $K_R$).

The speed of the motor is directly proportional to the fundamental wave frequency of the input current, thereby changing the speed of the motor by changing the fundamental wave frequency of the input current of each phase.

(3) Every two fundamental wave phases of the input currents in various phases of the motor are differed by 1/3 fundamental wave period.

When the phase of the fundamental wave of the V-phase input current of the motor lags the phase of the fundamental wave of the U-phase input current by 1/3 fundamental wave period and the phase of the fundamental wave of the W-phase input current of the motor lags the phase of the fundamental period of the U-phase input current by 1/3 fundamental wave period, the phase sequence of the input currents of the respective phases of the motor is a forward phase sequence, and the motor rotates forward at a low speed; and when the phase of the fundamental wave of the V-phase input current of the motor lags the phase of the fundamental wave of the U-phase input current by 2/3 fundamental wave period and the phase of the fundamental wave of the W-phase input current of the motor lags the phase of the fundamental wave of the U-phase input current by 1/3 fundamental wave period, the phase sequence of the input currents of the respective phases of the motor is a reverse phase sequence, and the motor rotates reversely at a low speed.

Under any frequency division coefficient, the synthesized rotating magnetic field moves in a circular motion, the three-phase current is balanced, and the vibration of the motor is very small in low-speed forward rotation or low-speed reverse rotation.

Preferably, trigger signals may only be sent to two thyristors of different phases at the same time, and the two trigger signals are a forward trigger signal and a reverse trigger signal respectively, which will be explained in detail in the following examples.

According to the control method for the soft starter for controlling low-speed forward rotation and low-speed reverse rotation of the motor of the present invention, an output torque of the motor is adjusted by controlling a trigger angle of each thyristor and/or the width of the trigger signal.

The followings are specific control examples of the control method for the soft starter for controlling low-speed forward rotation and low-speed reverse rotation of the motor.

Example I:

In the case that $n_0$ is 2 and the forward-rotation frequency division coefficient $K_F$ is 4, the trigger angles and trigger time sequences of the thyristors are controlled by the following steps , such that the motor rotates forward at a speed of $\frac{1}{4} N_e$ :

the period of the power grid is $T_{pwr}$, and then a period of a fundamental wave of a three-phase input current of the motor under a divide-by-4 low-speed reverse rotation state is $T1_{base} = 4 \times T_{pwr}$;

in step 4-1: a moment at which a falling edge signal of a R-phase voltage zero-crossing point of the power grid is detected is recorded as a time point $t_{4-1}$; then, the falling edge signal of the R-phase voltage zero-crossing point of the power grid is detected every other $T1_{base}$; a moment after a delay of $T_{pwr}/6$ from the time point $t_{4-1}$ is recorded as a time point $t_{4-2}$; trigger signals are simultaneously sent to the input terminals $V_{T-}$ and $V_{S+}$ at the time point of $t_{4-2}$, with a trigger width of 1.0-3.3ms, wherein there is current in the T and S phases but no current in the R phase (that is, there is an input current in the W and V phases of the motor, but no input current in the U phase);

in step 4-2: a moment after a delay of $T_{pwr}/6$ from the time point $t_{4-2}$ is recorded as a time point $t_{4-3}$; trigger signals are simultaneously sent to the input terminals $V_{R-}$ and $V_{S+}$ at the time point of $t_{4-3}$, with a trigger width of 1.0-3.3ms, wherein there is current in the R and S phases but no current in the T phase (that is, there is an input current in V and U phases, but no input current in the W phase);

in step 4-3: a moment after a delay of $T_{pw}/6$ from the time point $t_{4-3}$ is recorded as a time point $t_{4-4}$; trigger signals are simultaneously sent to the input terminals $V_{R-}$ and $V_{T+}$ at the time point of $t_{4-4}$, with a trigger width of 1.0-3.3ms; wherein there is current in the R and T phases but no current in the S phase (that is, there is an input current in W and U phases, but no input current in the V phase);

in step 4-4: a moment after a delay of $T_{pwr}$ from the time point $t_{4-4}$ is recorded as a time point $t_{4-5}$; trigger signals are simultaneously sent to the input terminals $V_{R-}$ and $V_{T+}$ at the time point of $t_{4-5}$, with a trigger width of 1.0-3.3ms;

wherein there is current in the R and T phases but no current in the S phase (that is, there is an input current in U and 2 phases, but no input current in the V phase);

in step 4-5: a moment after a delay of $T_{pw}/6$ from the time point $t_{4-5}$ is recorded as a time point $t_{4-6}$; trigger signals are simultaneously sent to the input terminals $V_{S-}$ and $V_{T+}$ at the time point of $t_{4-6}$, with a trigger width of 1.0-3.3ms; wherein there is current in the S and T phases but no current in the R phase (that is, there is an input current in V and W phases, but no input current in the U phase);

in step 4-6: a moment after a delay of $T_{pw}/6$ from the time point $t_{4-6}$ is recorded as a time point $t_{4-7}$; trigger signals are simultaneously sent to the input terminals $V_{R+}$ and $V_{S-}$ at the time point of $t_{4-7}$, with a trigger width of 1.0-3.3ms; wherein there is current in the S and R phases but no current in the T phase (that is, there is an input current in V and U phases, but no input current in the W phase);

in step 4-7: a moment after a delay of $T_{pwr}$ from the time point $t_{4-7}$ is recorded as a time point $t_{4-8}$; trigger signals are simultaneously sent to the input terminals $V_{R+}$ and $V_{S-}$ at the time point of $t_{4-8}$, with a trigger width of 1.0-3.3ms; wherein there is current in the S and R phases but no current in the T phase (that is, there is an input current in V and U phases, but no input current in the W phase);

in step 4-8: a moment after a delay of $T_{pwr}/6$ from the time point $t_{4-8}$ is recorded as a time point $t_{4-9}$; trigger signals are simultaneously sent to the input terminals $V_{R+}$ and $V_{T-}$ at the time point of $t_{4-9}$, with a trigger width of 1.0-3.3ms; wherein there is current in the R and T phases but no current in the S phase (that is, there is an input current in U and W phases, but no input current in the V phase);

in step 4-9: a moment after a delay of $T_{pwr}/6$ from the time point $t_{4-9}$ is recorded as a time point $t_{4-10}$; trigger signals are simultaneously sent to the input terminals $V_{T+}$ and $V_{S+}$ at the time point t40, with a trigger width of 1.0-3.3ms; wherein there is current in the S and T phases but no current in the R phase (that is, there is an input current in V and W phases, but no input current in the U phase); and

step 4-10: after the time point $t_{4-10}$, a falling edge signal of a voltage zero-crossing point of the R phase is detected again, and steps 4-1 to 4-9 are repeated until a shutdown command is received.

As shown in FIG. 2, a fundamental wave graph of the three-phase input current of the motor in Example 1 is shown, wherein every two of fundamental wave phases of R, S and T phases are differed by T1$_{base}$/3 in sequence, the input currents of respective phases are balanced, and the motor rotates forward at a low speed of $\frac{1}{4}N_e$.

It should be pointed out that when the forward-rotation frequency division coefficient $K_F$ takes other values (that is, other values other than 4), because different forward-rotation frequency division coefficients $K_F$ correspond to different trigger angles and trigger time sequences, the trigger angles and trigger time sequences can be adaptively changed based on Example 1, and finally the following three conditions can be met: (1) every two of the fundamental waveforms of the generated three-phase current are differed by 120°; (2) the current waveform of each phase is symmetrical, that is, the current waveform of each phase is a sine wave; and (3) the fundamental wave frequency of the current = grid frequency/forward-rotation frequency division coefficient.

Example II:

In the case that $n_1$ is 4 and the reverse-rotation frequency division coefficient $K_R$ is 5, the trigger angles and trigger time sequences of the thyristors are controlled by the following steps:

the period of the power grid is $T_{pwr}$, and then a period of a fundamental wave of a three-phase input current of the motor under a divide-by-5 low-speed reverse rotation state is T2$_{base}$ = 5 × $T_{pwr}$.

in step 5-1: a moment at which a falling edge signal of a R-phase voltage zero-crossing point of the power grid is detected is recorded as a time point $t_{5-1}$; then, the falling edge signal of the R-phase voltage zero-crossing point of the power grid is detected every other T2$_{base}$; a moment after a delay of $T_{pwr}/3$ from the time point $t_{5-1}$ is recorded as a time point $t_{5-2}$; trigger signals are simultaneously sent to the input terminals $V_{R-}$ and $V_{S+}$ at the time point of $t_{5-2}$, with a trigger width of 1.0-3.3ms; wherein there is current in the R and S phases but no current in the T phase (that is, there is an input current in U and V phases, but no input current in the W phase);

in step 5-2: a moment after a delay of $T_{pwr}/6$ from the time point $t_{5-2}$ is recorded as a time point $t_{5-3}$; trigger signals are simultaneously sent to the input terminals $V_{R-}$ and $V_{T+}$ at the time point of $t_{5-3}$, with a trigger width of 1.0-3.3ms; wherein there is current in the R and T phases but no current in the S phase (that is, there is an input current in U and W phases, but no input current in the V phase);

in step 5-3: a moment after a delay of $T_{pwr}2/3$ from the time point $t_{5-3}$ is recorded as a time point $t_{5-4}$; trigger signals are simultaneously sent to the input terminals $V_{S+}$ and $V_{T-}$ at the time point of $t_{5-4}$, with a trigger width of 1.0-3.3ms; wherein there is current in the S and T phases but no current in the R phase (that is, there is an input current in V and W phases, but no input current in the U phase);

in step 5-4: a moment after a delay of $T_{pwr}/6$ from the time point $t_{5-4}$ is recorded as a time point $t_{5-5}$; trigger signals are simultaneously sent to the input terminals $V_{R-}$ and $V_{S+}$ at the time point of $t_{5-5}$, with a trigger width of 1.0-3.3ms; wherein there is current in the R and S phases but no current in the T phase (that is, there is an input current in U and V phases, but no input current in the W phase);

in step 5-5: a moment after a delay of $T_{pwr}2/3$ from the time point $t_{5-5}$ is recorded as a time point $t_{5-6}$; trigger signals are simultaneously sent to the input terminals $V_{R+}$ and $V_{T-}$ at the time point of $t_{5-6}$, with a trigger width of 1.0-3.3ms; wherein there is current in the R and T phases but no current in the S phase (that is, there is an input current in U and W phases, but no input current in the V phase);

in step 5-6: a moment after a delay of $T_{pwr}/6$ from the time point $t_{5-6}$ is recorded as a time point $t_{5-7}$; trigger signals are simultaneously sent to the input terminals $V_{S+}$ and $V_{T-}$ at the time point of $t_{5-7}$, with a trigger width of 1.0-3.3ms; wherein there is current in the S and T phases but no current in the R phase (that is, there is an input current in V and W phases, but no input current in the U phase);

in step 5-7: a moment after a delay of $T_{pwr}2/3$ from the time point $t_{5-7}$ is recorded as a time point $t_{5-8}$; trigger signals are simultaneously sent to the input terminals $V_{S-}$ and $V_{R+}$ at the time point of $t_{5-8}$, with a trigger width of 1.0-3.3ms; wherein there is current in the S and R phases but no current in the T phase (that is, there is an input current in V and U phases, but no input current in the W phase);

in step 5-8: a moment after a delay of $T_{pwr}/6$ from the time point $t_{5-8}$ is recorded as a time point $t_{5-9}$; trigger signals are simultaneously sent to the input terminals $V_{R+}$ and $V_{T-}$ at the time point of $t_{5-9}$, with a trigger width of 1.0-3.3ms; wherein there is current in the R and T phases but no current in the S phase (that is, there is an input current in U and W phases, but no input current in the V phase);

in step 5-9: a moment after a delay of $T_{pwr}2/3$ from the time point $t_{5-9}$ is recorded as a time point $t_{5-10}$; trigger signals are simultaneously sent to the input terminals $V_{S-}$ and $V_{T+}$ at the time point of $t_{5-10}$, with a trigger width of 1.0-3.3ms; wherein there is current in the S and T phases but no current in the R phase (that is, there is an input current in V and W phases, but no input current in the U phase);

in step 5-10: a moment after a delay of $T_{pwr}/6$ from the time point $t_{5-10}$ is recorded as a time point $t_{5-11}$; trigger signals are simultaneously sent to the input terminals $V_{S-}$ and $V_{R+}$ at the time point of $t_{5-11}$, with a trigger width of 1.0-3.3ms; wherein there is current in the S and R phases but no current in the T phase (that is, there is an input current in V and U phases, but no input current in the W phase);

in step 5-11: a moment after a delay of $T_{pwr}2/3$ from the time point $t_{5-10}$ is recorded as a time point $t_{5-12}$; trigger signals are simultaneously sent to the input terminals $V_{R-}$ and $V_{T+}$ at the time point of $t_{5-12}$, with a trigger width of 1.0-3.3ms; wherein there is current in the T and R phases but no current in the S phase (that is, there is an input current in W and U phases, but no input current in the V phase);

in step 5-12: a moment after a delay of $T_{pwr}/6$ from the time point $t_{5-11}$ is recorded as a time point $t_{5-13}$; trigger signals are simultaneously sent to the input terminals $V_{S-}$ and $V_{T+}$ at the time point of $t_{5-13}$, with a trigger width of 1.0-3.3ms; wherein there is current in the S and T phases but no current in the R phase (that is, there is an input current in V and W phases, but no input current in the U phase); and

step 5-13: after the time point $t_{5-13}$, a falling edge signal of a voltage zero-crossing point of the R phase is detected again, and steps 5-1 to 5-12 are repeated until a shutdown command is received.

As shown in FIG. 3, a fundamental wave graph of the three-phase input current of the motor in Example II is shown, wherein every two of fundamental wave phases of R, S and T phases are differed by $T1_{base}2/3$, the input currents of respective phases are balanced, and the motor rotates reversely at a low speed of $\frac{1}{5}N_e$.

It should be pointed out that when the reverse-rotation frequency division coefficient $K_R$ takes other values (that is, other values other than 5), because different reverse-rotation frequency division coefficients $K_R$ correspond to different trigger angles and trigger time sequences, the trigger angles and trigger time sequences can be adaptively changed based on Example II, and finally the following three conditions can be met: (1) every two of the fundamental waveforms of the generated three-phase current are differed by 120°; (2) the current waveform of each phase is symmetrical, that is, the current waveform of each phase is a sine wave; and (3) the fundamental wave frequency of the current = grid frequency/reverse-rotation frequency division coefficient.

It can be seen from Example I and Example II that:

1. by controlling the trigger time sequence of the thyristors, the rotation direction of the motor can be controlled, that is, the motor is controlled to rotate forward or reversely;

2. by controlling the time points of inputting the trigger signals to the thyristors, the time point at which the thyristor is switched on can be controlled, so that a current (i.e., a current signal of a steamed bun waveform in FIG. 2 and FIG. 3) corresponding to the trigger signal is inputted to the motor through the thyristor, and a fundamental wave frequency of the current inputted to the motor is equal to the grid frequency/forward-rotation or reverse-rotation frequency division coefficient, that is, the fundamental wave period of the current inputted to the motor is equal to the grid period $\times$ the forward-rotation or reverse-rotation frequency division coefficient; and

3. by controlling the initial trigger angle of the thyristor, the intensity of the current inputted to the motor through the thyristor can be achieved, so as to adjust the output torque of the motor.

Preferably, according to the control method for the soft starter for controlling low-speed forward rotation and low-speed reverse rotation of the motor of the present invention, the output torque of the motor is increased or decreased by synchronously decreasing or increasing the trigger angle during the fundamental wave period of the three-phase input current of the motor. Further, the trigger angle decreases or increases by $\delta$ degrees each time, $9 \leq \delta \leq 36$, wherein the larger the $\delta$ value, the greater the change value of the output torque of the motor, that is, the larger the $\delta$ value, the greater the rate of change of the output torque of the motor.

We have made further detailed description of the present invention mentioned above in combination with specific preferred embodiments, but it is not deemed that the specific embodiments of the present invention is only limited to these descriptions. A person skilled in the art can also, without departing from the concept of the present invention, make several simple deductions or substitutions, which all be deemed to fall within the protection scope of the present invention.

**Claims**

1. A control method for a soft starter for controlling low-speed forward rotation and low-speed reverse rotation of a motor, wherein a soft starter comprises three phases of anti-parallel thyristors, wherein the anti-parallel thyristor connected in series between an input terminal of a T phase of a power grid and an input terminal of a W phase of the motor has a signal terminal $V_{T+}$ and a signal terminal $V_{T-}$; the anti-parallel thyristor connected in series between an input terminal of an S phase of the power grid and an input terminal of a V phase of the motor has a signal terminal $V_{S+}$ and a signal terminal $V_{S-}$; and the anti-parallel thyristor connected in series between an input terminal of an R phase of the power grid and an input terminal of a U phase of the motor has a signal terminal $V_{R+}$ and a signal terminal $V_{R-}$;

a forward-rotation frequency division coefficient $K_F$ of the low-speed forward rotation of the motor satisfies the following formula:

$$K_F = \left(\frac{2}{3} \times \pi + n_0 \times \pi\right)/\left(\frac{2}{3} \times \pi\right) = 1 + n_0 \times \frac{3}{2};$$

a speed of the low-speed forward rotation of the motor is $V_F = N_e \times \frac{1}{K_F}$,

in which, $n_0$ is an integer, $K_F$ is a positive integer, and $N_e$ is a rated speed of the motor;

a reverse-rotation frequency division coefficient $K_R$ of the low-speed reverse rotation of the motor satisfies the following formula:

$$K_R = \left(\frac{2}{3} \times \pi + n_1 \times \pi\right)/\left(-\frac{2}{3} \times \pi\right) = -1 - n_1 \times \frac{3}{2};$$

a speed of the low-speed reverse rotation of the motor is $V_R = N_e \times \frac{1}{K_R}$,

in which, $n_1$ is an integer, and $K_R$ is a positive integer; and

a trigger time sequence of the thyristors and a time point at which a trigger signal is inputted to the thyristor each time are controlled to control the motor with the soft starter for low-speed forward rotation at a speed of $V_F$ or low-speed reverse rotation at a speed of $V_R$.

2. The control method for the soft starter for controlling low-speed forward rotation and low-speed reverse rotation of the motor according to claim 1, wherein

the control method for the soft starter makes the input current of each phase of the motor conform to the following conditions:

(1) a fundamental wave of the input current of each phase of the motor is a sine wave;

(2) a fundamental wave period $T_{base}$ of the input current of each phase of the motor is obtained based on the forward-rotation frequency division coefficient $K_F$ or the reverse-rotation frequency division coefficient $K_R$, and the fundamental wave frequency $T_{base}$ of the input current of each phase of the motor is a power grid period $T_{pwr} \times (K_F \text{ or } K_R)$; and

(3) every two of fundamental wave phases of the input currents in respective phases of the motor are differed by 1/3 fundamental wave period $T_{base}$.

**3.** The control method for the soft starter for controlling low-speed forward rotation and low-speed reverse rotation of the motor according to claim 2, wherein

when the phase of the fundamental wave of the V-phase input current of the motor lags the phase of the fundamental wave of the U-phase input current by 1/3 fundamental wave period and the phase of the fundamental wave of the W-phase input current of the motor lags the phase of the fundamental period of the U-phase input current by 1/3 fundamental wave period, a phase sequence of the input currents of the respective phases of the motor is a forward phase sequence, and the motor rotates forward at a low speed; and

when the phase of the fundamental wave of the V-phase input current of the motor lags the phase of the fundamental wave of the U-phase input current by 2/3 fundamental wave period and the phase of the fundamental wave of the W-phase input current of the motor lags the phase of the fundamental wave of the U-phase input current by 1/3 fundamental wave period, the phase sequence of the input currents of the respective phases of the motor is a reverse phase sequence, and the motor rotates reversely at a low speed.

**4.** The control method for the soft starter for controlling low-speed forward rotation and low-speed reverse rotation of the motor according to claim 1, wherein trigger signals may only be sent to two thyristors of different phases at the same time, and the two trigger signals are a forward trigger signal and a reverse trigger signal respectively.

**5.** The control method for the soft starter for controlling low-speed forward rotation and low-speed reverse rotation of the motor according to claim 1, wherein an output torque of the motor is adjusted by controlling a trigger angle of the thyristor.

**6.** The control method for the soft starter for controlling low-speed forward rotation and low-speed reverse rotation of the motor according to any one of claims 1 to 5, wherein in the case that the forward-rotation frequency division coefficient $K_F=4$, the trigger angles and trigger time sequence of the thyristors and a time point at which the trigger signal is inputted to the thyristor each time are controlled by the following steps:

the period of the power grid is $T_{pwr}$, and then a period of a fundamental wave of a three-phase input current of the motor under a divide-by-4 low-speed forward rotation state is $T1_{base} = 4 \times T_{pwr}$;

in step 4-1: a moment at which a falling edge signal of a R-phase voltage zero-crossing point of the power grid is detected is recorded as a time point $t_{4-1}$; then, the falling edge signal of the R-phase voltage zero-crossing point of the power grid is detected every other $T1_{base}$; a moment after a delay of $T_{pwr}/6$ from the time point $t_{4-1}$ is recorded as a time point $t_{4-2}$; trigger signals are sent to the input terminals $V_{T-}$ and $V_{S+}$ at the time point of $t_{4-2}$, with a trigger width of 1.0-3.3ms;

in step 4-2: a moment after a delay of $T_{pwr}/6$ from the time point $t_{4-2}$ is recorded as a time point $t_{4-3}$; trigger signals are simultaneously sent to the input terminals $V_{R-}$ and $V_{S+}$ at the time point of $t_{4-3}$, with a trigger width of 1.0-3.3ms;

in step 4-3: a moment after a delay of $T_{pw}/6$ from the time point $t_{4-3}$ is recorded as a time point $t_{4-4}$; trigger signals are simultaneously sent to the input terminals $V_{R-}$ and $V_{T+}$ at the time point of $t_{4-4}$, with a trigger width of 1.0-3.3ms;

in step 4-4: a moment after a delay of $T_{pwr}$ from the time point $t_{4-4}$ is recorded as a time point $t_{4-5}$; trigger signals are simultaneously sent to the input terminals $V_{R-}$ and $V_{T+}$ at the time point of $t_{4-5}$, with a trigger width of 1.0-3.3ms;

in step 4-5: a moment after a delay of $T_{pw}/6$ from the time point $t_{4-5}$ is recorded as a time point $t_{4-6}$; trigger signals are simultaneously sent to the input terminals $V_{S-}$ and $V_{T+}$ at the time point of $t_{4-6}$, with a trigger width of 1.0-3.3ms;

in step 4-6: a moment after a delay of $T_{pwr}/6$ from the time point $t_{4-6}$ is recorded as a time point $t_{4-7}$; trigger signals are simultaneously sent to the input terminals $V_{R+}$ and $V_{S-}$ at the time point of $t_{4-7}$, with a trigger width of 1.0-3.3ms;

in step 4-7: a moment after a delay of $T_{pwr}$ from the time point $t_{4-7}$ is recorded as a time point $t_{4-8}$; trigger signals are simultaneously sent to the input terminals $V_{R+}$ and $V_{S-}$ at the time point of $t_{4-8}$, with a trigger width of 1.0-3.3ms;

in step 4-8: a moment after a delay of $T_{pwr}/6$ from the time point $t_{4-8}$ is recorded as a time point $t_{4-9}$; trigger signals are simultaneously sent to the input terminals $V_{R+}$ and $V_{T-}$ at the time point of $t_{4-9}$, with a trigger width of 1.0-3.3ms;

in step 4-9: a moment after a delay of $T_{pwr}/6$ from the time point $t_{4-9}$ is recorded as a time point $t_{4-10}$; trigger signals are simultaneously sent to the input terminals $V_{T+}$ and $V_{S+}$ at the time point t40, with a trigger width of 1.0-3.3ms; and

step 4-10: a falling edge signal of a voltage zero-crossing point of the R phase is detected, and steps 4-1 to 4-9 are repeated until a shutdown command is received.

**7.** The control method for the soft starter for controlling low-speed forward rotation and low-speed reverse rotation of the motor according to any one of claims 1 to 5, wherein in the case that the reverse-rotation frequency division coefficient $K_R=5$, the trigger angles and trigger time sequence of the thyristors and a time point at which the trigger signal is inputted to the thyristor each time are controlled by the following steps:

the period of the power grid is $T_{pwr}$, and then a period of a fundamental wave of a three-phase input current of the motor under a divide-by-5 low-speed reverse rotation state is $T2_{base} = 5 \times T_{pwr}$.

in step 5-1: a moment at which a falling edge signal of a R-phase voltage zero-crossing point of the power grid is detected is recorded as a time point $t_{5-1}$; then, the falling edge signal of the R-phase voltage zero-crossing point of the power grid is detected every other $T2_{base}$; a moment after a delay of $T_{pwr}/3$ from the time point $t_{5-1}$ is recorded as a time point $t_{5-2}$; trigger signals are simultaneously sent to the input terminals $V_{R-}$ and $V_{S+}$ at the time point of $t_{5-2}$, with a trigger width of 1.0-3.3ms;

in step 5-2: a moment after a delay of $T_{pwr}/6$ from the time point $t_{5-2}$ is recorded as a time point $t_{5-3}$; trigger signals are simultaneously sent to the input terminals $V_{R-}$ and $V_{T+}$ at the time point of $t_{5-3}$, with a trigger width of 1.0-3.3ms;

in step 5-3: a moment after a delay of $T_{pwr}2/3$ from the time point $t_{5-3}$ is recorded as a time point $t_{5-4}$; trigger signals are simultaneously sent to the input terminals $V_{S+}$ and $V_{T-}$ at the time point of $t_{5-4}$, with a trigger width of 1.0-3.3ms;

in step 5-4: a moment after a delay of $T_{pwr}/6$ from the time point $t_{5-4}$ is recorded as a time point $t_{5-5}$; trigger signals are simultaneously sent to the input terminals $V_{R-}$ and $V_{S+}$ at the time point of $t_{5-5}$, with a trigger width of 1.0-3.3ms;

in step 5-5: a moment after a delay of $T_{pwr}2/3$ from the time point $t_{5-5}$ is recorded as a time point $t_{5-6}$; trigger signals are simultaneously sent to the input terminals $V_{R+}$ and $V_{T-}$ at the time point of $t_{5-6}$, with a trigger width of 1.0-3.3ms;

in step 5-6: a moment after a delay of $T_{pwr}/6$ from the time point $t_{5-6}$ is recorded as a time point $t_{5-7}$; trigger signals are simultaneously sent to the input terminals $V_{S+}$ and $V_{T-}$ at the time point of $t_{5-7}$, with a trigger width of 1.0-3.3ms;

in step 5-7: a moment after a delay of $T_{pwr}2/3$ from the time point $t_{5-7}$ is recorded as a time point $t_{5-8}$; trigger signals are simultaneously sent to the input terminals $V_{S-}$ and $V_{R+}$ at the time point of $t_{5-8}$, with a trigger width of 1.0-3.3ms;

in step 5-8: a moment after a delay of $T_{pwr}/6$ from the time point $t_{5-8}$ is recorded as a time point $t_{5-9}$; trigger signals are simultaneously sent to the input terminals $V_{R+}$ and $V_{T-}$ at the time point of $t_{5-9}$, with a trigger width of 1.0-3.3ms;

in step 5-9: a moment after a delay of $T_{pwr}2/3$ from the time point $t_{5-9}$ is recorded as a time point $t_{5-10}$; trigger signals are simultaneously sent to the input terminals $V_{S-}$ and $V_{T+}$ at the time point of $t_{5-10}$, with a trigger width of 1.0-3.3ms;

in step 5-10: a moment after a delay of $T_{pwr}/6$ from the time point $t_{5-10}$ is recorded as a time point $t_{5-11}$; trigger signals are simultaneously sent to the input terminals $V_{S-}$ and $V_{R+}$ at the time point of $t_{5-11}$, with a trigger width of 1.0-3.3ms;

in step 5-11: a moment after a delay of $T_{pwr}2/3$ from the time point $t_{5-10}$ is recorded as a time point $t_{5-12}$; trigger signals are simultaneously sent to the input terminals $V_{R-}$ and $V_{T+}$ at the time point of $t_{5-12}$, with a trigger width of 1.0-3.3ms;

in step 5-12: a moment after a delay of $T_{pwr}/6$ from the time point $t_{5-11}$ is recorded as a time point $t_{5-13}$; trigger signals are simultaneously sent to the input terminals $V_{S-}$ and $V_{T+}$ at the time point of $t_{5-13}$, with a trigger width of 1.0-3.3ms; and

step 5-13: a falling edge signal of a voltage zero-crossing point of the R phase is detected, and steps 5-1 to 5-12 are repeated until a shutdown command is received.

**8.** The control method for the soft starter for controlling low-speed forward rotation and low-speed reverse rotation of the motor according to claim 1, wherein the output torque of the motor is increased or decreased by synchronously decreasing or increasing the trigger angle during the fundamental wave period of the three-phase input current of the motor.

9. The control method or the soft starter for controlling low-speed forward rotation and low-speed reverse rotation of the motor according to claim 8, wherein the trigger angle is reduced by δ degrees each time, 9≤δ≤36.

10. The control method for the soft starter for controlling low-speed forward rotation and low-speed reverse rotation of the motor according to claim 1, wherein the anti-parallel thyristor connected in series between the input terminal of the T phase of the power grid and the input terminal of the W phase of the motor comprises a T-phase positive thyristor SCR5 and a T-phase negative thyristor SCR6, the T-phase positive thyristor SCR5 has a signal terminal $V_{T+}$, and the T-phase negative thyristor SCR6 has a signal terminal $V_{T-}$; the anti-parallel thyristor connected in series between the input terminal of the S phase of the power grid and the input terminal of the V phase of the motor comprises an S-phase positive thyristor SCR3 and an S-phase negative thyristor SCR4, the S-phase positive thyristor SCR3 has a signal terminal $V_{S+}$, and the S-phase negative thyristor SCR4 has a signal terminal $V_{S-}$; and the anti-parallel thyristor connected in series between the input terminal of the R phase of the power grid and the input terminal of the U phase of the motor includes comprises an R-phase positive thyristor SCR1 and an R-phase negative thyristor SCR2, the R-phase positive thyristor SCR1 has a signal terminal $V_{R+}$, and the R-phase negative thyristor SCR2 has a signal terminal $V_{R-}$.

11. The control method for the soft starter for controlling low-speed forward rotation and low-speed reverse rotation of the motor according to claim 1, wherein
the forward-rotation frequency division coefficient $K_F$ of the low-speed forward rotation of the motor is calculated as follows:

an angular velocity of rotation of a power frequency magnetic field is $\omega_1$, and an angular velocity of rotation of the magnetic field after forward frequency division is $\omega_{2F}$, and a relationship of $\omega_1$ and $\omega_{2F}$ conforms to the following equation:

$$\omega_1 = K_F \times \omega_{2F} \quad \text{Equation (1)}$$

in which, $K_F$ is a forward-rotation frequency division coefficient and is a positive integer;
the power grid is a three-phase equilibrium system, wherein a phase difference between every two phases is 120°, the A phase and the B phase are any two of R, S, T phases of the power grid, and when a phase angle of the A phase is 0°, a phase angle of the B phase conforms to the following equation:

$$\omega_1 \times t - (2/3)\pi = n_0\pi \quad \text{Equation (2)}$$

in which, n is an integer, and t is time;
the low-speed forward-rotation frequency division power grid system, that is, a three-phase power supply system that makes the soft starter rotate at a low speed inputted by the soft starter to the motor, is also a three-phase equilibrium system, wherein a phase difference between every two phases is 120°, an $A_F$ phase and a $B_F$ phase are any two of three phases (i.e., the $A_F$ phase and the $B_F$ phase are any two of U, V and W phases of input currents that make the motor rotate forward at a low speed) of the low-speed forward-rotation frequency division power grid system; and when a phase angle of the $A_F$ phase is 0°, a phase angle of the $B_F$ phase conforms to the following equation:

$$\omega_{2F} \times t - (2/3)\pi = 0 \quad \text{Equation (3)}$$

the following equation is obtained by transformation of Equation (3):

$$\omega_{2F} \times t = (2/3)\pi \quad \text{Equation (4)}$$

the following equation is obtained by substituting Equation (1) into Equation (2):

$$K_F \times \omega_{2F} \times t = (2/3)\pi + n_0\pi \quad \text{Equation (5)}$$

the following equation is obtained by substituting Equation (3) into Equation (5):

$$K_F = (\tfrac{2}{3} \times \pi + n_0 \times \pi)/(\tfrac{2}{3} \times \pi) = 1 + n_0 \times \tfrac{3}{2};$$

the reverse-rotation frequency division coefficient $K_R$ of the low-speed reverse rotation of the motor is calculated by the following method:

an angular velocity of rotation of a power frequency magnetic field is $\omega_1$, and an angular velocity of rotation of the magnetic field after reverse-rotation frequency division is $\omega_{2R}$, and a relationship of $\omega_1$ and $\omega_2$ conforms to the following equation:

$$\omega_1 = K_R \times \omega_{2R} \qquad \text{Equation (6)}$$

in which, $K_R$ is a reverse-rotation frequency division coefficient and is a positive integer;

the power grid is a three-phase equilibrium system, wherein a phase difference between every two phases is 120°, the A phase and the B phase are any two of R, S, T phases of the power grid, and when a phase angle of the A phase is 0°, a phase angle of the B phase conforms to the following equation:

$$\omega_1 \times t - (2/3)\pi = n_1\pi \qquad \text{Equation (7)}$$

in which, n is an integer, and t is time;

the low-speed reverse-rotation frequency division power grid system, that is, a three-phase power supply system that makes the soft starter rotate at a low speed inputted by the soft starter to the motor, is also a three-phase equilibrium system, wherein a phase difference between every two phases is 120°, an $A_R$ phase and a $B_R$ phase are any two of three phases (i.e., the $A_R$ phase and the $B_R$ phase are any two of U, V and W phases of input currents that make the motor to rotate reversely at a low speed) of the low-speed reverse-rotation frequency division power grid system; and when a phase angle of the $A_R$ phase is 0°, a phase angle of the $B_R$ phase conforms to the following equation:

$$\omega_{2R} \times t + (2/3)\pi = 0 \qquad \text{Equation (8)}$$

the following equation is obtained by transformation of Equation (8):

$$\omega_{2R} \times t = -(2/3)\pi \qquad \text{Equation (9)}$$

the following equation is obtained by substituting Equation (6) into Equation (7):

$$K_R \times \omega_{2R} \times t = (2/3)\pi + n_1\pi \qquad \text{Equation (10)}$$

the following equation is obtained by substituting Equation (9) into Equation (10):

$$K_R = (\tfrac{2}{3} \times \pi + n_1 \times \pi)/(-\tfrac{2}{3} \times \pi) = -1 - n_1 \times \tfrac{3}{2}.$$

FIG. 1

FIG. 2

FIG. 3

## INTERNATIONAL SEARCH REPORT

| International application No. |
| --- |
| **PCT/CN2022/107725** |

**A. CLASSIFICATION OF SUBJECT MATTER**

H02P 23/24(2016.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNTXT; CNABS; DWPI; VEN; USTXT; WOTXT; CNKI; IEEE: 软启动, 低速, 晶闸管, 分频, 电机, soft start, low speed, thyristor, frequency division, motor

**C. DOCUMENTS CONSIDERED TO BE RELEVANT**

| Category* | Citation of document, with indication, where appropriate, of the relevant passages | Relevant to claim No. |
| --- | --- | --- |
| A | CN 206628999 U (HARBIN UNIVERSITY OF SCIENCE AND TECHNOLOGY) 10 November 2017 (2017-11-10) description, paragraphs 22-30, and figures 1-3 | 1-11 |
| A | CN 103904955 A (SEARI ELECTRICAL APPARATUS TECHNOLOGY CO., LTD. et al.) 02 July 2014 (2014-07-02) description, paragraphs 19-35 | 1-11 |
| A | CN 105978436 A (SHAANXI UNIVERSITY OF SCIENCE AND TECHNOLOGY) 28 September 2016 (2016-09-28) entire document | 1-11 |
| A | US 2003146722 A1 (GRIEPENTROG, Gerd et al.) 07 August 2003 (2003-08-07) entire document | 1-11 |
| A | CN 101411052 A (RONGXIN POWER ELECTRONIC CO., LTD.) 15 April 2009 (2009-04-15) entire document | 1-11 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **24 September 2022** | **10 October 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| PCT/CN2022/107725 |

| Patent document cited in search report | | | Publication date (day/month/year) | Patent family member(s) | | | Publication date (day/month/year) |
|---|---|---|---|---|---|---|---|
| CN | 206628999 | U | 10 November 2017 | None | | | |
| CN | 103904955 | A | 02 July 2014 | CN | 103904955 | B | 10 August 2016 |
| CN | 105978436 | A | 28 September 2016 | None | | | |
| US | 2003146722 | A1 | 07 August 2003 | WO | 0148908 | A1 | 05 July 2001 |
| | | | | CA | 2395500 | A1 | 05 July 2001 |
| | | | | BR | 0016704 | A | 24 September 2002 |
| | | | | DE | 50003864 | D1 | 30 October 2003 |
| | | | | EP | 1240712 | A1 | 18 September 2002 |
| | | | | EP | 1240712 | B1 | 24 September 2003 |
| | | | | US | 6870333 | B2 | 22 March 2005 |
| | | | | CA | 2395500 | C | 25 January 2011 |
| | | | | BR | PI0016704 | B1 | 21 July 2015 |
| CN | 101411052 | A | 15 April 2009 | CN | 1889354 | A | 03 January 2007 |
| | | | | US | 2009267552 | A1 | 29 October 2009 |
| | | | | EP | 2061144 | A1 | 20 May 2009 |
| | | | | JP | 2009545287 | A | 17 December 2009 |
| | | | | IL | 194026 | A | 28 February 2013 |
| | | | | WO | 2008014681 | A1 | 07 February 2008 |
| | | | | CN | 101411052 | B | 18 April 2012 |
| | | | | US | 8179082 | B2 | 15 May 2012 |
| | | | | JP | 5349304 | B2 | 20 November 2013 |

Form PCT/ISA/210 (patent family annex) (January 2015)